Europäisches Patentamt

European Patent Office

Office européen des brevets

(11) Numéro de publication: **0 275 761 B1**

# FASCICULE DE BREVET EUROPEEN

(45) Date de publication de fascicule du brevet:
25.09.91

(51) Int. Cl.⁵: **G02B 27/32**

(21) Numéro de dépôt: 87402887.1

(22) Date de dépôt: **17.12.87**

(54) **Dispositif de visée pour arme à feu.**

(30) Priorité: **19.12.86 FR 8617819**

(43) Date de publication de la demande:
**27.07.88 Bulletin 88/30**

(45) Mention de la délivrance du brevet:
**25.09.91 Bulletin 91/39**

(84) Etats contractants désignés:
**AT BE CH DE ES GB IT LI SE**

(56) Documents cités:
**EP-A- 0 069 575
EP-A- 0 181 124
DE-A- 1 943 458
DE-A- 2 532 930
US-A- 2 780 130**

**Naumann H., Bauelemente der Optik (1983),
pp 186,187**

(73) Titulaire: **GIAT Industries
13, route de la Minière
F-78034 Versailles Cédex(FR)**

(72) Inventeur: **Noiret, Pierre
86, rue Bourbonnoux
F-18000 Bourges(FR)**

(74) Mandataire: **Célanie, Christian et al
GIAT Industries Direction Recherche et Développement 13 route de la Minière
F-78034 Versailles Cédex(FR)**

## Description

La présente invention concerne les dispositifs de visée et plus particulièrement les dispositifs de visée pour armes à feu portatives.

Les dispositifs de visée utilisés pour les armes portatives sont de deux types : optiques ou mécaniques.

Les dispositifs optiques utilisent par exemple une lunette télescopique ; ils permettent une visée précise et ne nécessitent pas d'effort d'accommodation de l'oeil ; en revanche, ils sont chers et fragiles.

Les dispositifs mécaniques sont plus rustiques ; ils sont constitués par deux repères, le plus proche de l'oeil est un cran de mire, le plus éloigné est un guidon. Ces dispositifs nécessitent un travail d'accommodation de l'oeil successivement en trois points : la cible, le guidon, le cran de mire. Ceci implique que l'élément qui se trouve le plus près de l'oeil, en soit éloigné de la distance minimum de confort d'accommodation, soit environ 400 mm. De plus, la distance entre le cran de mire et le guidon doit être assez grande pour avoir une précision de visée suffisante. Ces deux conditions conduisent dans la pratique à des lignes de mire oeil - cran de mire - guidon d'environ 800 mm de long.

De tels dispositifs ne peuvent donc équiper que des armes portatives d'épaule longues, ou éventuellement des armes de poing tenues à bout de bras.

Or, les fusils modernes sont de plus en plus courts et ne sont plus assez longs pour pouvoir être équipés du dispositif à cran de mire et guidon, si l'on souhaite leur donner une bonne précision pour le tir à grande distance.

Pour les armes d'épaule relativement courtes, on adopte souvent un dispositif à oeilleton et guidon. Dans un tel dispositif, l'oeil n'accommode que sur la cible et le guidon ; en effet, l'oeilleton à travers lequel la visée est prise, est situé près de l'oeil et n'est perçu que sous la forme d'une image floue.

Le guidon, lui, pour être vu nettement, doit être situé à une distance de l'oeil d'au moins 400 mm, distance qui correspond ici à la longueur de la ligne de mire. Ce dispositif présente un certain nombre d'inconvénients.

Il y a une perte de précision de visée due à l'utilisation de l'oeilleton ; une bonne visée nécessiterait un alignement de l'oeilleton avec le guidon et avec la cible ; or, l'oeilleton n'est pas réellement perçu par l'oeil du tireur qui ne peut accommoder sur lui ; il en résulte une visée où le tireur ne peut aligner que la cible et le guidon et doit chercher à centrer ces deux derniers à l'intérieur d'un oeilleton flou.

D'autre part, l'utilisation d'une ligne de mire relativement courte (400 mm) a aussi une influence sur la précision du tir. Cette ligne de mire courte est cependant le minimum ergonomique permettant une vision nette du guidon et de la cible sans fatigue. Elle risque donc d'être une contrainte dans la conception d'armes d'épaule de plus en plus compactes.

Enfin, un autre inconvénient est que le guidon, couramment réalisé sous la forme d'un "grain d'orge" masque une partie, voire la totalité, de la cible sur laquelle il doit être aligné. Même dans le cas de l'utilisation d'un guidon annulaire, ce dernier, apparaissant à l'intérieur de l'oeilleton flou, masque une partie du champ visuel offert par l'oeilleton dont le diamètre ne pourrait être augmenté sans entraîner une diminution importante de la précision de tir.

Il a été proposé, notamment dans le brevet US-A-2 780 130, afin de remédier aux inconvénients précédemment énumérés, un viseur, dit viseur clair sphérique, composé d'un miroir sphérique semi-réfléchissant au foyer duquel se trouve un repère de visée (fils en croix, en V ou en T). Le miroir semi-réfléchissant laisse passer les rayons lumineux issus du point de visée sans déformation notable, et donne du repère de visée une image virtuelle à l'infini constituant le guidon. Le repère est placé très près de l'oeil et n'est donc pas vu par ce dernier ; seule l'image dans le miroir se superposant à la cible est perçue.

Ce viseur présente néanmoins plusieurs inconvénients. Le miroir semi-réfléchissant absorbe de la lumière et se trouve de ce fait difficilement utilisable de nuit ou dans la pénombre. Il brille aussi énormément dès que le tireur est en face du soleil et est alors incompatible avec le camouflage. Enfin, pour que les rayons lumineux issus du point visé ne soient pas déformés, il est nécessaire d'avoir un rayon de courbure suffisamment important, ainsi qu'une épaisseur réduite pour le miroir semi-réfléchissant ; deux contraintes qui, en éloignant le foyer, donc le repère, du miroir et en fragilisant ce dernier, vont à l'encontre de la recherche de compacité et de rusticité. Il est ainsi pratiquement impossible de réaliser un viseur de moins de 50 mm de longueur.

Enfin, si ce viseur offre un grand champ de vision, il peut être délicat d'emploi ; en effet, le repère de visée n'est visible que si l'oeil se trouve sur l'axe optique du miroir, axe dont la position est d'autant plus difficile à déterminer que le champ de vision offert est large.

Le brevet DE-A-1 943 458 décrit une lunette d'approche dont la conception est inspirée de celle des télescopes astronomiques à miroir. Elle comprend deux lames transparentes, dont l'une porte une couronne réfléchissante et une lentille divergente, et dont l'autre porte une zone réfléchissante, une lentille convergente ainsi qu'un motif destiné à fournir un repère de visée. Le motif n'est pas disposé entre l'oeil et le miroir concave orienté vers l'oeil et les images de l'objet visé et du repère ne peuvent se superposer dans l'oeil de l'utilisateur que par la combinaison des lentilles.

Le brevet DE-A-2 532 930 décrit un viseur comprenant un bloc optique portant deux dioptres, dont l'un est semi-réfléchissant constituant ainsi un miroir et l'autre porte un motif dont l'image réfléchie sur le dioptre semi-réfléchissant constitue un repère de visée. L'inconvénient de cette réalisation réside dans le manque de discrétion du miroir semi-réfléchissant et le coût important lié à la réalisation de deux dioptres. De plus, le dépôt semi-réfléchissant n'est pas protégé, ce qui le rend fragile, et le positionnement de l'oeil par rapport au repère de visée est difficile à effectuer en raison du champ de vision large qu'est offert.

Le but de l'invention est de fournir un dispositif de visée rustique, bon marché et très compact, permettant néanmoins d'obtenir une bonne précision de visée, en assurant une grande longueur de ligne de mire oeil-guidon, tout en aidant au bon positionnement de l'oeil relativement au guidon. De plus, le dispositif selon l'invention ne donne pas d'image déformée de la cible et est utilisable de jour comme de nuit sans nuire au camouflage.

Le but de l'invention est atteint au moyen des caractéristiques de la revendication 1.

Le dispositif comporte avantageusement une lame à faces parallèles dont une des faces est en contact avec la face plane de la lentille.

Le motif géométrique peut être solidaire de la face plane de la lentille ou bien d'une face de la lame, et peut être constitué de préférence au moins en partie par un dépôt de matériau luminescent.

Selon une variante, le motif géométrique a une forme déterminant un espace contenant son centre de gravité, ce dernier étant le point à aligner avec la cible au cours de la visée.

Le motif géométrique peut consister en un ensemble de segments de droites, ou bien tout ou partie d'une couronne circulaire.

De façon avantageuse, le dispositif comporte une source de lumière, telle une diode électroluminescente, disposée de façon à éclairer le motif géométrique. La ou les sources de lumière pourront être disposées et conformées de façon à éclairer le motif géométrique par réflexion sur le miroir.

Enfin, on peut intégrer le dispositif dans un boîtier obtenu par surmoulage de la lentille et de la lame à l'aide d'un matériau plastique opaque à la lumière.

L'invention sera mieux comprise à la lecture de la description qui va suivre, description faite en regard des dessins annexés dans lesquels :

- la figure 1 montre un viseur clair selon l'état de la technique, ainsi que le cheminement de la lumière dans un tel viseur,
- la figure 2 montre un viseur selon l'invention,
- les figures 3A, 3B, 3C montrent diverses formes de réalisation du motif géométrique du viseur selon l'invention,
- la figure 4 montre un viseur selon l'invention équipé d'un dispositif d'éclairement du motif géométrique.

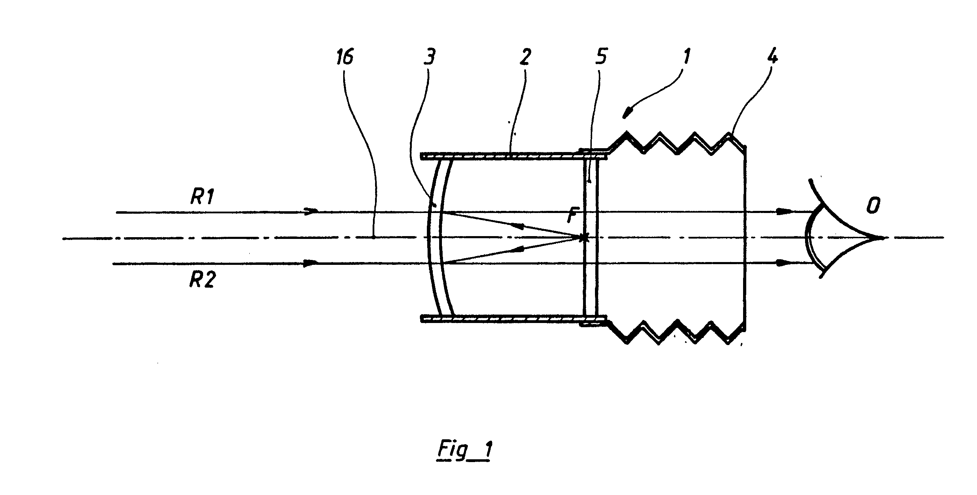

En se raportant à la figure 1, un dispositif de visée 1 selon l'état de la technique (viseur clair) est constitué par un tube 2 à l'intérieur duquel se trouve une lame transparente 5 portant un motif géométrique formant réticule ; cette lame est située dans le plan focal d'un miroir semi-réfléchissant 3 à grand rayon de courbure et faible épaisseur.

Une bonnette souple 4 permet à l'utilisateur de positionner correctement son oeil. L'axe optique 16 du miroir matérialise la direction de visée. Le viseur est lié de façon connue à une arme non représentée.

Les rayons lumineux R1 et R2 en provenance de la cible parviennent à l'oeil situé en O sans subir de déformation en raison de la minceur du miroir 3. Le motif géométrique situé dans le plan focal est de dimension réduite afin de se trouver très près du foyer F du miroir, et possède une image virtuelle située à l'infini et qui est vue par l'oeil en superposition avec la cible. Cette image constitue le repère de visée ; le motif lui-même est trop près de l'oeil pour être perçu. Les inconvénients de ce dispositif ont déjà été énumérés dans l'introduction. Ce sont d'une part la fragilité et l'encombrement résultant de la nécessité d'utiliser un miroir mince et de grand rayon de courbure, et d'autre part la perte de luminosité et de discrétion due au revêtement semi-réfléchissant.

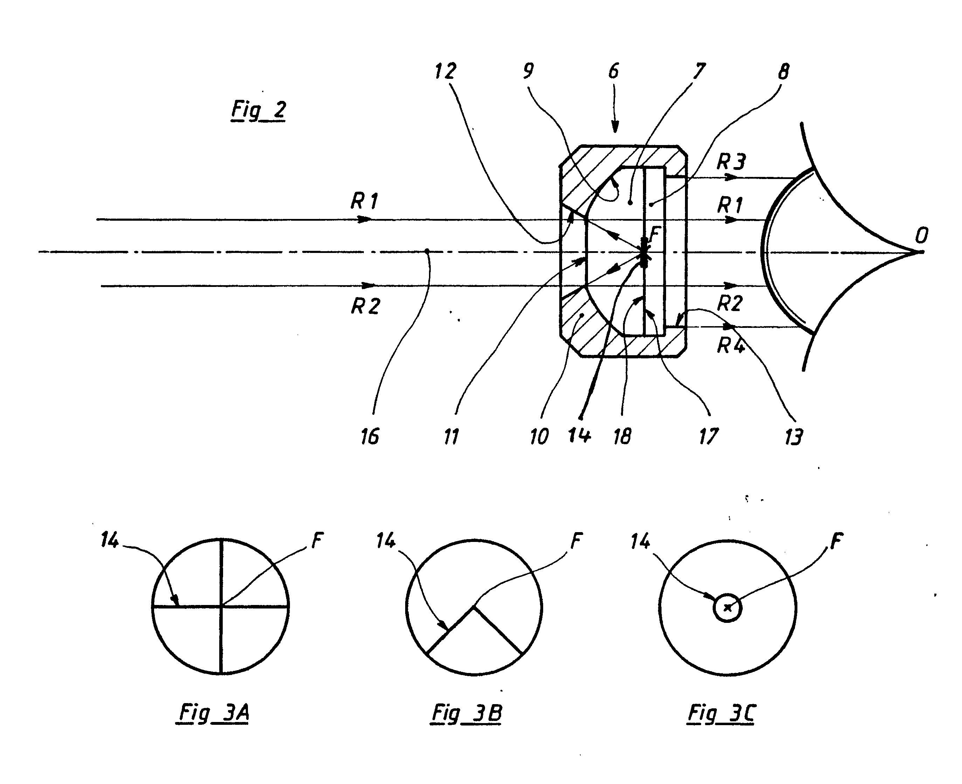

La figure 2 représente un dispositif de visée 6 selon l'invention. Celui-ci comporte un boîtier 10 renfermant une lentille plan convexe 7 ; cette lentille est recouverte d'un matériau réfléchissant sur sa partie convexe 9 et constitue ainsi un miroir.

Un méplat 11 est réalisé sur cette partie convexe au niveau de l'axe optique 16 du miroir et perpendiculairement à ce dernier. Ce méplat n'est pas recouvert de matériau réfléchissant.

Le méplat 11 étant parallèle à la face 17 de la lentille, ces deux faces de la lentille constituent une lame à faces parallèles.

Le boîtier 10 comporte une ouverture 12, cylindrique ou conique en regard du méplat 11, et une ouverture cylindrique 13 formant oculaire.

Une lame 8 à faces parallèles est en contact, par une face 18, avec la face plane 17 de la lentille. Le motif géométrique 14 est gravé soit sur la face 17 de la lentille 7 soit sur la face 18 de la lame 8. Les dimensions de la lentille 7 sont choisies de telle manière que ce motif géométrique se trouve dans le plan focal du miroir lorsque la lame 8 est en contact avec elle.

Les figures 3A, 3B et 3C montrent diverses formes de motifs géométriques 14 pouvant être adoptées ; le foyer F, intersection de l'axe optique 16 du miroir avec le plan focal, peut faire partie du motif lui même, comme par exemple sur les figures 3A et 3B où le motif 14 est constitué par des droites concourantes au point F, ou bien se trouver à l'intérieur d'un espace déterminé par le motif 14, comme sur la figure 3C. Dans ce dernier cas, les dimensions du motif seront suffisamment réduites pour que le miroir donne une image à l'infini de ce motif sans distorsions gênantes.

Un mode avantageux de réalisation du dispositif de visée consiste à surmouler le boîtier 10 en matériau plastique opaque à la lumière sur la lentille 7 et la lame 8 ; ces derniers se trouvent alors totalement immobilisés et correctement positionnés du point de vue optique en raison de leur précision de formes. Les ouvertures 13 et 12 pourront être réalisées par des inserts retirés après solidification du boîtier 10.

Le fonctionnement du dispositif est le suivant. Le champ visuel est limité par les rayons R3 et R4 correspondant à l'ouverture de l'oculaire 13. Dans ce champ visuel se trouve une partie "utile" correspondant à la lumière provenant de la cible à travers l'ouverture 12 (rayons R1 et R2) ; mais l'oeil voit aussi, grâce à la partie réfléchissante du miroir qui lui renvoie la lumière issue du motif géométrique 14, l'image virtuelle du motif 14 à l'infini. Ainsi, l'ouverture 12 joue le rôle de l'oeilleton d'un viseur mécanique tandis que l'image virtuelle joue le rôle du guidon.

L'architecture de ce dispositif de visée permet de pallier les inconvénients du dispositif de la figure 1. En effet, l'utilisation d'une lentille réfléchissante permet d'obtenir un miroir à rayon de courbure sans que ce dernier ne soit trop fragile ; les déformations du champ visuel sont pratiquement inexistantes, car, du fait du méplat 11, les rayons lumineux provenant de la cible ne traversent pas une lentille, mais une lame à faces parallèles 11-17. Il n'y a pas de problèmes de camouflage, puisque la partie réfléchissante est invisible de l'extérieur du dispositif. Le rendement optique est amélioré en raison de la transparence totale de la lentille au niveau du méplat, et de son pouvoir réfléchissant total en dehors de ce dernier. L'ensemble obtenu est aussi très rustique ; le motif 14 est protégé par la lentille 7 et par la lame 8, le boîtier 10 enferme de façon étanche tous les éléments optiques.

Il est possible ainsi de réaliser un dispositif de visée dont la longueur totale ne dépasse pas 10 mm et le diamètre extérieur 15 mm, cela en utilisant une lentille de rayon 5 mm. Le motif géométrique se trouve alors à 2,5 mm de l'ouverture 12 et est ainsi éclairé par la lumière du jour pénétrant dans cette ouverture ; le bon rendement du miroir assure une image contrastée de ce motif.

A titre de comparaison, le dispositif de la figure 1 a une longueur minimum de 50 mm.

Enfin, le dispositif selon l'invention, en raison de ses dimensions réduites et de l'ouverture réduite 12, permet de faciliter le positionnement de l'oeil relativement à l'axe optique 16 et donc la perception de l'image du motif 14.

Il devient impossible de ne pas percevoir cette image lorsqu'on observe le champ offert par l'ouverture 12.

Par contre, dans le dispositif de la figure 1, le champ très large offert par le miroir oblige à une recherche de l'image du motif par déplacement de la position de l'oeil relativement à l'axe optique 16.

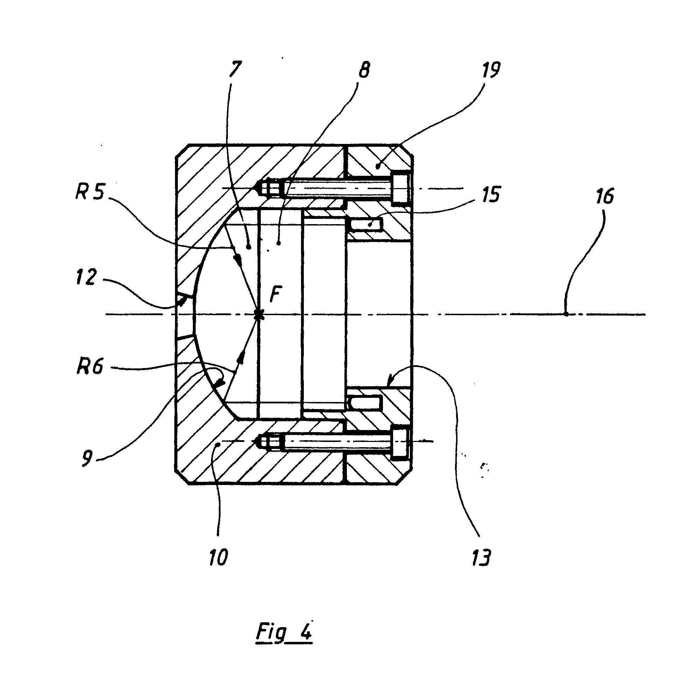

Pour faciliter la visée nocturne ou crépusculaire, on peut recouvrir le motif géométrique 14 d'un matériau luminescent, qui restitue une part de la lumière reçue par le dispositif durant le jour. On pourra aussi pour rendre le motif plus visible prévoir une source lumineuse l'éclairant, par exemple par réflexion sur le miroir ; à titre d'exemple, la figure 4 montre un dispositif de visée équipé de diodes électroluminescentes 15 disposées à la périphérie de l'ouverture 13 ; la lumière émise par ces diodes ne gêne pas l'oeil. Elle éclaire, après réflexion sur la surface réfléchissante 9 (rayons R5 et R6), le motif disposé au voisinage du foyer F. Ce dernier donne alors une image virtuelle lumineuse qui est perçue par l'oeil. Les diodes ainsi que leur dispositif d'alimentation, d'un type connu non représenté ici, peuvent être partiellement noyées dans le matériau constituant le boîtier 10, ou bien être solidaires d'une bague 19 adaptable sur ce boîtier et fixée par des vis ou tout autre moyen de liaison.

**Revendications**

1. Dispositif de visée, du type comportant un miroir concave présentant une symétrie de révolution relativement à son axe optique (16), et un motif géométrique (14) disposé entre l'oeil de l'utilisateur et le miroir dans le plan focal de celui-ci, ce dernier donnant alors une image virtuelle à l'infini de ce motif, qui constitue un repère, la visée constituant à aligner une cible avec un point de ce repère, caractérisé en ce que le miroir (9) est constitué par une lentille (7) plan convexe, la partie convexe (9) étant recouverte d'un matériau réfléchissant totalement opaque, et en ce que le miroir comporte une zone non réfléchissante et transparente constituée par un méplat (11) réalisé perpendiculairement à l'axe optique (16) du miroir.

2. Dispositif de visée selon la revendication 1, caractérisé en ce qu'il comporte une lame à faces parallèles (8) dont une des faces (18) est en contact avec la face plane (17) de la lentille (7).

3. Dispositif de visée selon la revendication 2, caractérisé en ce que le motif géométrique (14) est, solidaire de la face plane (17) de la lentille.

4. Dispositif de visée selon une des revendications 2 ou 3, caractérisé en ce que le motif géométrique (14) est solidaire d'une face de la lame (8).

5. Dispositif de visée selon une des revendications 3 ou 4, caractérisé en ce que le motif géométrique (14) est constitué, au moins en partie, par un dépôt de matériau luminescent.

6. Dispositif de visée selon une des revendications 1 à 5, caractérisé en ce que le motif géométrique (14) a une forme déterminant un espace contenant son centre de gravité, ce dernier étant le point à aligner avec la cible au cours de la visée.

7. Dispositif de visée selon une des revendications 1 à 6, caractérisé en ce que le motif géométrique (14) consiste en un ensemble de segments de droite.

8. Dispositif de visée selon une des revendications 1 à 6, caractérisé en ce que le motif géométrique (14) consiste en tout ou partie d'une couronne circulaire.

9. Dispositif de visée selon une des revendications 1 à 8. caractérisé en ce qu'il comporte au moins une source de lumière, telle une diode électroluminescente (15), disposée de façon à éclairer le motif géométrique (14).

10. Dispositif de visée selon la revendication 9, caractérisé en ce que la ou les sources de lumière sont disposées et conformées de façon à éclairer le motif géométrique par réflexion sur le miroir.

11. Dispositif de visée selon une des revendications 2 à 10, caractérisé en ce qu'il comporte un boîtier obtenu par surmoulage de la lentille (7) et de la lame (8) par un matériau plastique opaque.

**Claims**

1. Sighting device, of the type including a concave mirror having symmetry of revolution relative to its optical axis, and having a geometric pattern arranged between the eye of the user and the mirror in the focal plane of the mirror, which mirror then sets up a virtual image of this pattern at infinity, constituting an aiming mark, the aiming consisting of aligning a target with a point of this mark, wherein the said mirror consists of a flat-convex lens, the convex part of which is covered with a totally opaque reflective material, and wherein the mirror includes a nonreflecting, transparent zone consisting of a flat portion, perpendicular to the optical axis of the mirror.

2. Device of claim 1, wherein it includes one parallel-face plate, one face of which is in contact with the flat face of the lens.

3. Device of claim 2, wherein the geometric pattern is integral with the flat face of the lens.

4. Device of claim 2 or 3, wherein the geometrical pattern is integral with one face of the plate.

5. Device of either claim 3 or 4, wherein the geometric pattern consists at least partly of a deposit of luminescent material.

6. Device of any claim 1 to 5, wherein the geometric pattern has a shape determining a space containing its center of gravity. wherein the center of gravity is the point to be aligned with the target during aiming.

7. Device according to any claim 1 to 6, wherein the geometric pattern consists of a set of straight line segments.

8. Device of any claim 1 to 6, wherein the geometric pattern consists all or partly of a circular ring.

9. Device of any claim 1 to 8, wherein it includes at least one light source such as a light-emitting diode, arranged so as to illuminate the geometric pattern.

10. Device of claim 9, wherein the light source(s) is (are) arranged and conformed so as to illuminate the geometrical pattern by reflection on the mirror.

**EP 0 275 761 B1**

11. Device according to any claim 2 to 10, wherein it includes a casing obtained by molding over the lens and plate with an opaque plastic material.

**Patentansprüche**

1. Zieleinrichtung für Feuerwaffen bestehend aus einem um deren optische Achse (16) rotationssymetrischen Hohlspiegel, einem zwischen dem Auge des Schützen und dem Spiegel in dessen Brennpunktebene angeordneten Zielmarkenmuster (14), wobei dieses Zielmarkenmuster ein ins Unendliche abgelenktes, virtuelles und als Zielmarke verwendetes Bild gibt und wobei das Zielen darin besteht, einen Punkt der somit erhaltenen Zielmarke auf das Ziel zu richten, **dadurch gekennzeichnet, daß** der Spiegel (9) aus einer flach-konvexen Linse (7) besteht, wobei der konvexe Teil (9) der Linse mit einer widerspiegelnden und völlig undurchsichtigen Schicht überdampft wird, und daß der Spiegel einen nicht rückspiegelnden und durchsichtigen Bereich aufweist, der aus einer senkrecht zur optischen Achse (16) des Spiegels gestalteten Anflachung (11) besteht.

2. Zieleinrichtung nach Anspruch 1, dadurch gekennzeichnet, daß sie aus einer Planparallelplatte (8) besteht, deren eine Seite (18) mit der flachen Seite (17) der Linse (7) in Kontakt steht.

3. Zieleinrichtung nach Anspruch 2, dadurch gekennzeichnet, daß das geometrische Zielmarkenmuster (14) auf der flachen Seite (17) der Linse eingeätzt ist.

4. Zieleinrichtung nach Anspruch 2, dadurch gekennzeichnet, daß das geometrische Zielmarkenmuster (14) auf einer Seite der Planparallelplatte (8) eingeätzt ist.

5. Zieleinrichtung nach Anspruch 3 oder 4, dadurch gekennzeichnet, daß das geometrische Zielmarkenmuster zumindest teilweise aus dem Auftrag eines selbstleuchtenden Werkstoffes besteht.

6. Zieleinrichtung nach einem beliebigen Anspruch 1 bis 5, dadurch gekennzeichnet, daß das geometrische Zielmarkenmuster (14) ein Feld bildet, dessen Schwerpunkt anläßlich des Zielens auf das Ziel gerichtet werden muß.

7. Zieleinrichtung nach einem beliebigen Anspruch 1 bis 6, dadurch gekennzeichnet, daß das geometrische Zielmarkenmuster (14) aus einem Satz Geradenabschnitte besteht.

8. Zieleinrichtung nach einem beliebigen Anspruch 1 bis 6, dadurch gekennzeichnet, daß das geometrische Zielmarkenmuster (14) aus einem ganzen bzw. Teilring besteht.

9. Zieleinrichtung nach einem beliebigen Anspruch 1 bis 8, dadurch gekennzeichnet, daß sie mindestens mit einer Lichtquelle, z. B. einer Leuchtdiode (15), ausgestattet ist, die zwecks Beleuchtung des geometrischen Zielmarkenmusters (14) entsprechend angeordnet ist.

10. Zieleinrichtung nach Anspruch 9, dadurch gekennzeichnet, daß die Lichtquelle(n) so ausgelegt und angeordnet ist (sind), daß das Zielmarkenmuster durch Rückspiegelung auf dem Spiegel beleuchtet wird.

11. Zieleinrichtung nach einem beliebigen Anspruch 2 bis 10, dadurch gekennzeichnet, daß sie in einem Gehäuse eingefaßt werden, das durch Überformen der Linse (7) und der Planparallelplatte (8) mit einem lichtundurchlässigen Kunststoff gefertigt wird.

Fig_1

EP 0 275 761 B1

Fig 2

Fig 3A

Fig 3B

Fig 3C

_Fig 4_

EP 0 275 761 B1